# EUROPEAN PATENT SPECIFICATION

(11) **EP 3 545 742 B1**
(45) Date of publication and mention of the grant of the patent: **17.08.2022**
(21) Application number: 19161755.4
(22) Date of filing: 08.03.2019
(51) Int. Cl.: A01D 34/416, A01D 34/73

(54) **TRIMMER HEAD AND ATTACHMENTS**
TRIMMERKOPF UND AUFSÄTZE
TÊTE DE TONDEUSE ET ACCESSOIRES

(30) Priority: 09.03.2018 US 201862640803 P
(43) Date of publication of application: 02.10.2019
(73) Proprietor: Techtronic Outdoor Products Technology Limited, Hamilton HM12 (BM)
(72) Inventor: Hoffman, Ronald J., Iva, SC South Carolina 29655 (US); Holman, Christopher A., Clemson, SC South Carolina 29631 (US)
(74) Representative: Novagraaf Group

(56) References cited:
- EP-A1- 1 891 851
- US-A- 6 119 350
- US-A1- 2010 083 506
- US-A1- 2017 339 825

## Description

### FIELD OF THE INVENTION

The present invention relates to trimmers and, more particularly, to a trimmer head and attachments.

### BACKGROUND

Generally, trimmers are used to cut grass and weeds and are often used to edge around trees, near fences and walls, and along landscape borders. Conventional string trimmers include an elongated shaft with a rotating element or head near the end of the shaft, and a spool or string head is attached to the head. Typically, the string head includes a monofilament line (i.e., trimmer line) rotated by the head for cutting and trimming along landscaped areas, fences, walls, etc.

US 2017/0339825 A1 shows a grass cutting head with a cutting line, a housing comprising an inner space for a spool for winding a stock of cutting line, and elongation mechanism for the cutting line and at least one cutting blade which is rigidly fastened to the housing of the grass cutting head. In the embodiment shown in Figures 41 to 44, the housing is cylindrical and comprises elastic tabs which are formed in a sidewall of the housing. The cutting blade comprises slots which engage with the elastic tabs of the housing to fix the housing, the spool and the blade to each other. EP1891851 and US2010083506 also show trimmers.

### SUMMARY OF THE INVENTION

In one independent aspect, an assembly for use with a trimmer may be provided. The assembly may generally include a body being rotatable about an axis and defining an annular channel; and a retainer radially movable between a retaining position, in which the retainer overlaps the channel to selectively retain the attachment when the attachment is supported on the body, and a release position, in which relative axial movement of the attachment and the head is allowed. The assembly further includes an attachment including an attachment body extending about the axis and positionable in the channel and an attachment operation member projecting radially from the attachment body.

The assembly (or body) may define a trimmer head including a body couplable to a drive shaft of the trimmer

The assembly may further comprise a biasing member configured to bias the retainer to the retaining position.

The assembly may further comprise a projection positioned between the trimmer head and the attachment. The projection may be configured to transfer rotation of the trimmer head to the attachment.

The projection may be circumferentially aligned with the retainer.

The assembly may further comprise an actuating mechanism operable to adjust the radial position of the retainer. The actuating mechanism may be axially movable to actuate the retainer.

The actuating mechanism may include a plate engageable by a user to adjust the position of the retainer.

The actuating mechanism may include a carrier supporting and receiving an angled projection of the carrier, the plate moving the carrier to cause movement of the retainer.

The assembly may further include a biasing member configured to bias the actuating mechanism to a position corresponding to the retaining position of the retainer.

The assembly may further comprise a projection on the body and configured to transfer rotation of the trimmer head to the attachment, the projection being operable to support the retainer in the retaining position.

The assembly may further comprise a second retainer circumferentially spaced from the first-mentioned retainer, the second retainer being supported for radial movement between a retaining position, in which the second retainer overlaps the channel to selectively retain the attachment when the attachment is supported on the body, and a release position, in which relative axial movement of the attachment and the head is allowed.

In another independent aspect, a method of operating an assembly for use with a trimmer may be provided. The assembly may include a trimmer head including a body rotatable about an axis and defining an annular channel, a retainer selectively positionable to cover the channel, and an adjustment mechanism operable to position the retainer, and an attachment including an attachment body defining a central opening and an attachment operation member extending from the attachment body. The method may generally include moving the adjustment mechanism in one direction along the axis to cause the retainer to move radially to uncover the channel; positioning the attachment on the head with the attachment body in the channel and extending about the axis; and moving the adjustment mechanism in an opposite direction along the axis to cause the retainer to move axially to cover the channel and retain the attachment on the head.

Moving the adjustment mechanism in one direction may cause the retainer to move radially inwardly, and moving the adjustment mechanism in an opposite direction causes the retainer to move radially outwardly.

Positioning the attachment on the head may further include positioning a drive projection of the head with an associated notch of the attachment.

The assembly may further comprise a plurality of attachments, each of the attachments being selectively, removably couplable to the trimmer head, the plurality of attachments including a cutting attachment and a second attachment of a different type than the cutting attachment, the second attachment selected from a blower attachment, a string trimmer attachment, an edger attachment, or a flail cutter attachment.

The assembly may further comprise a flail cutter attachment which may generally include a body providing an interface for attachment to a drive mechanism for rotation about an axis, the body including a first half and a separate second half, the first half being substitutable for the second half; a plurality of pins connecting the first half and the second half; and a plurality of blades, each of the plurality of blades including a connecting portion defining an opening receiving a corresponding one of the plurality of pins, and a cutting portion.

The body may define a plurality of slots, and each of the plurality of blades may be positionable in a corresponding one of the plurality of slots.

The first half and the second half may each include a plurality of bosses, each of the plurality of bosses defining a recess, the first half and the second half being positioned to align a pair of recesses along a pin axis, each pair of recesses receiving an associated pin.

Any of the optional features discussed above in relation to one aspect may, where appropriate, be applied to another aspect.

Other independent aspects of the invention may become apparent by consideration of the detailed description, claims and accompanying drawings.

### BRIEF DESCRIPTION OF THE DRAWINGS

Fig. 1 is a perspective view of a trimmer head.
Fig. 2 is a bottom view of a body of the head of Fig. 1.
Fig. 3 is a bottom view of the head of Fig. 1 with an attachment supported thereon.
Fig. 4 is a bottom view of the head and the attachment as shown in Fig. 3, with the lower housing removed.
Fig. 5 is a bottom view of the head and the attachment as shown in Fig. 3, with a retainer removed.
Fig. 6 is a cross-sectional side view of the head and the attachment as shown in Fig. 3, taken generally along line 6-6 in Fig. 3.
Fig. 7 is a side view of a portion of the head of Fig. 1, with the body removed.
Fig. 8 is a top view of the head of Fig. 1.
Fig. 9 is a side view of the head of Fig. 1.
Fig. 10 is another side view of the head of Fig. 1.
Fig. 11 is a perspective view of an attachment, such as a string cutter attachment, for use with the head of Fig. 1.
Fig. 12 is a perspective view of the body of the attachment of Fig. 11.
Fig. 13 is a perspective view of another alternative construction of an attachment, such as an edger blade attachment, for use with the head of Fig. 1.
Fig. 14 is a perspective view of yet another alternative construction of an attachment, such as a blower attachment, for use with the head of Fig. 1.
Fig. 15 is a perspective view of an alternative attachment, such as a flail cutter attachment, for use with the head of Fig. 1.
Fig. 16 is a top view of the attachment of Fig. 15.
Fig. 17 is a perspective view of the attachment of Fig. 15, with a body portion detached.
Fig. 18 is a side view of the attachment of Fig. 15.
Fig. 19 is another side view of the attachment of Fig. 15.
Fig. 20 is a side cross-sectional view of the attachment of Fig. 15, taken generally along line 20-20 in Fig. 16.
Fig. 21 is a perspective view of the attachment of Fig. 15, with the blades removed.
Fig. 22 is a side view of the attachment as shown in Fig. 21.
Fig. 23 is another side view of the attachment as shown in Fig. 21.
Fig. 24 is a perspective view of an alternative construction of a trimmer head.
Fig. 25 is a bottom view of a body of the head of Fig. 24.
Fig. 26 is a bottom view of the head of Fig. 24.
Fig. 27 is a bottom view of the head of Fig. 24, with the lower housing removed.
Fig. 28 is a bottom view of the head as shown in Fig. 27, with two retainers removed.
Fig. 29 is a cross-sectional side view of the head of Fig. 24, taken generally along line 29-29 in Fig. 26.
Fig. 30 is a side view of a portion of the head of Fig. 24, with the body removed.
Fig. 31 is a top view of the head of Fig. 24.
Fig. 32 is a side view of the head of Fig. 24.
Fig. 33 is another side view of the head of Fig. 24.
Fig. 34 is a perspective cross-sectional view of the head of Fig. 24 with an attachment supported thereon, illustrating a retaining position of a retainer assembly.
Fig. 35 is a perspective cross-sectional view of the head and the attachment as shown in Fig. 34, illustrating a release position of the retainer assembly.
Fig. 36 is a perspective view of various attachments for use with the head of Fig. 24.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of' and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

Relative terminology, such as, for example, "about", "approximately", "substantially", etc., used in connection with a quantity or condition would be understood by those of ordinary skill to be inclusive of the stated value or condition and has the meaning dictated by the context (for example, the term includes at least the degree of error associated with the measurement of, tolerances (e.g., manufacturing, assembly, use, etc.) associated with the particular value or condition, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

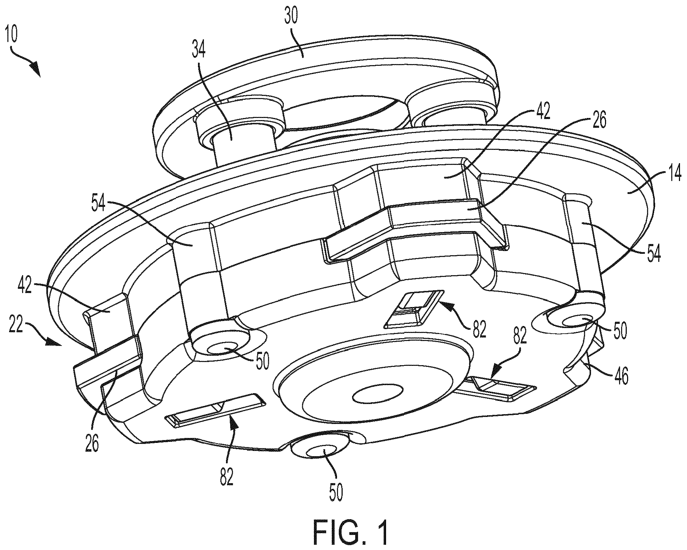

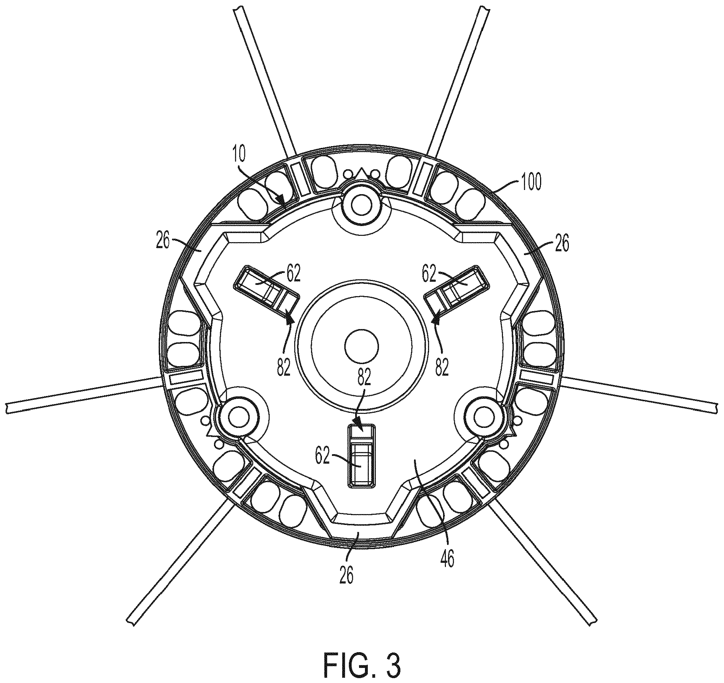

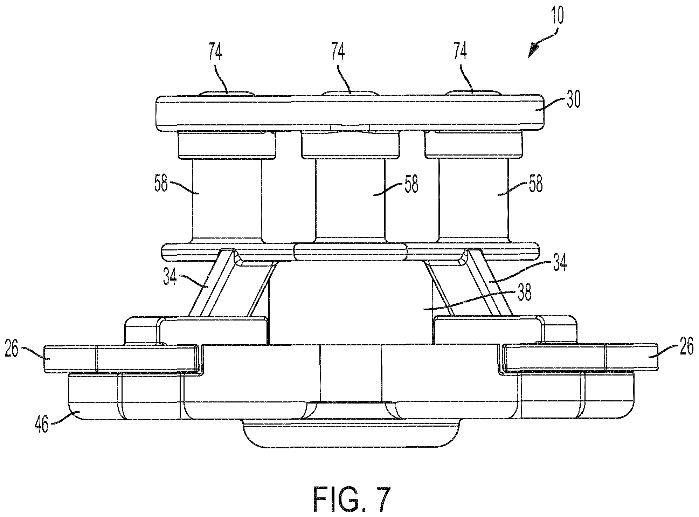

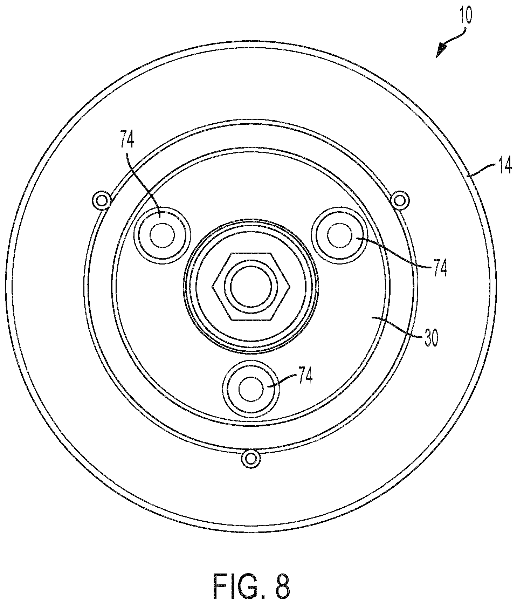

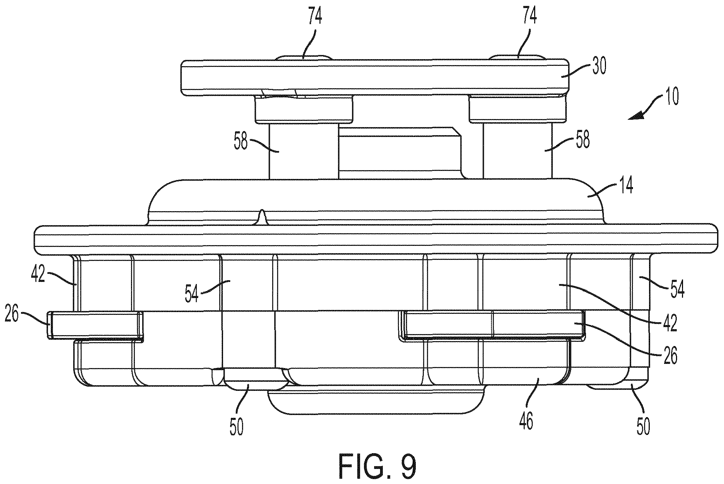

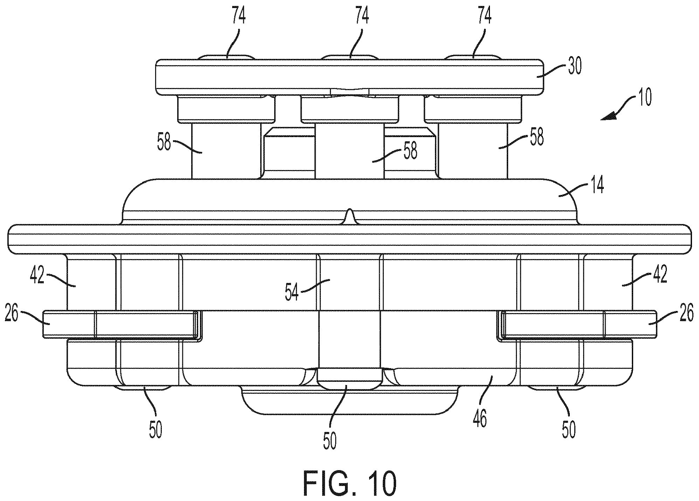

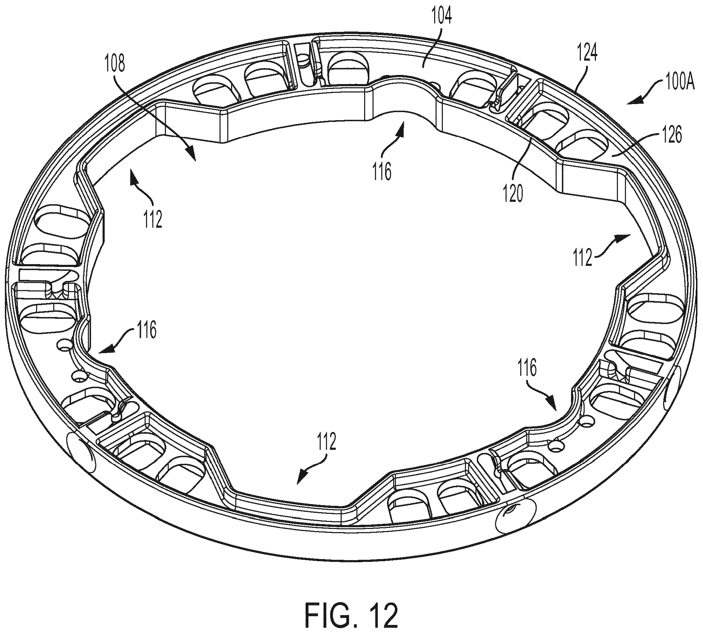

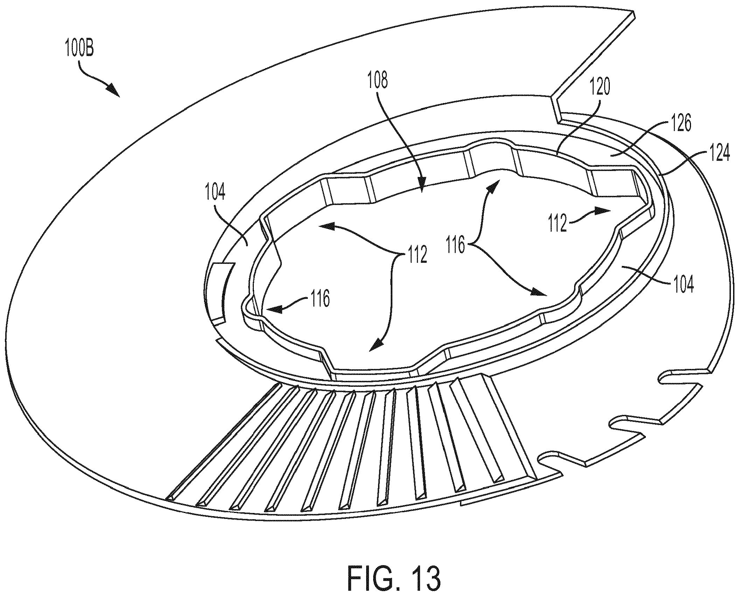

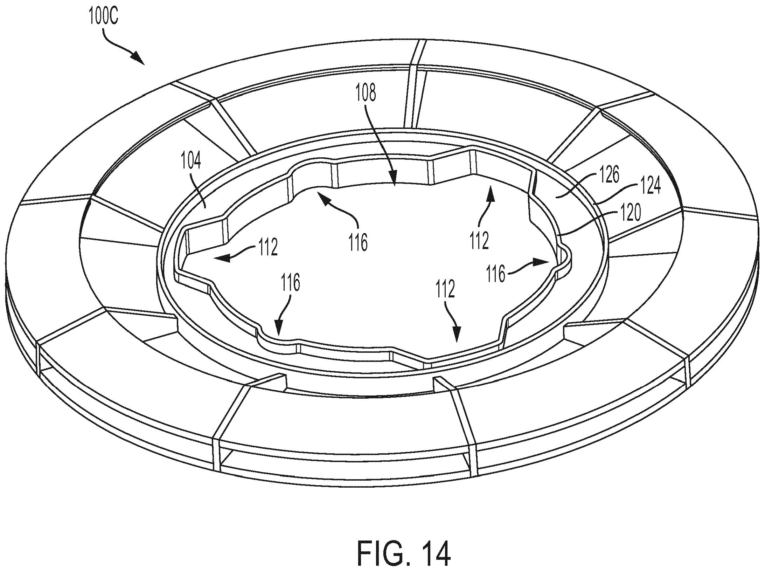

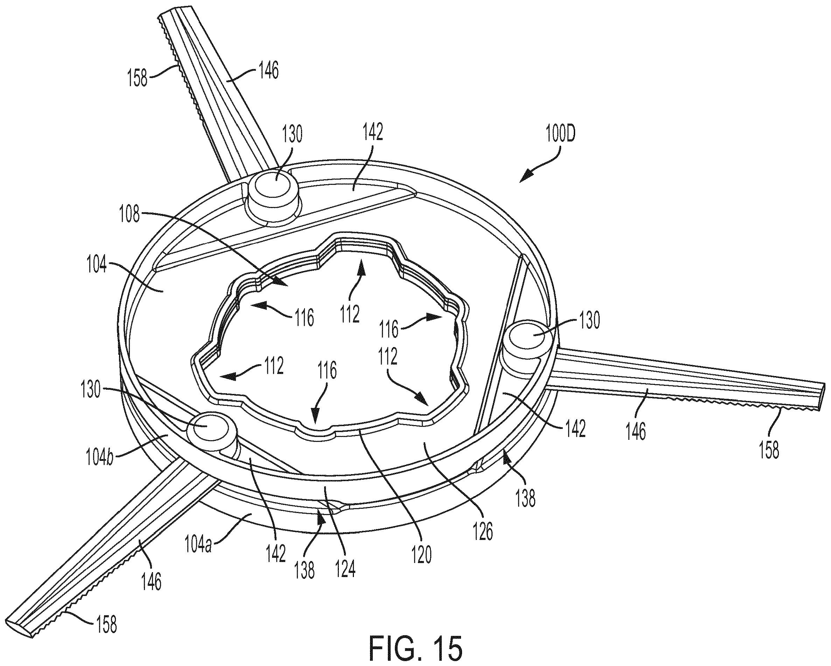

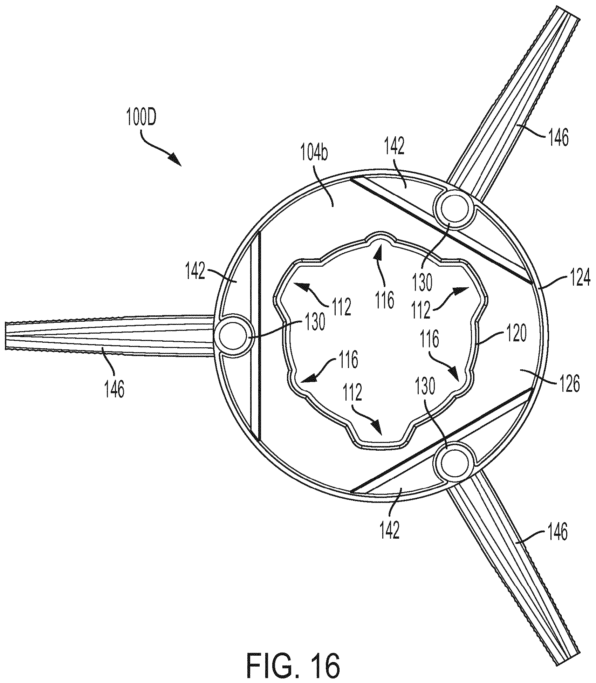

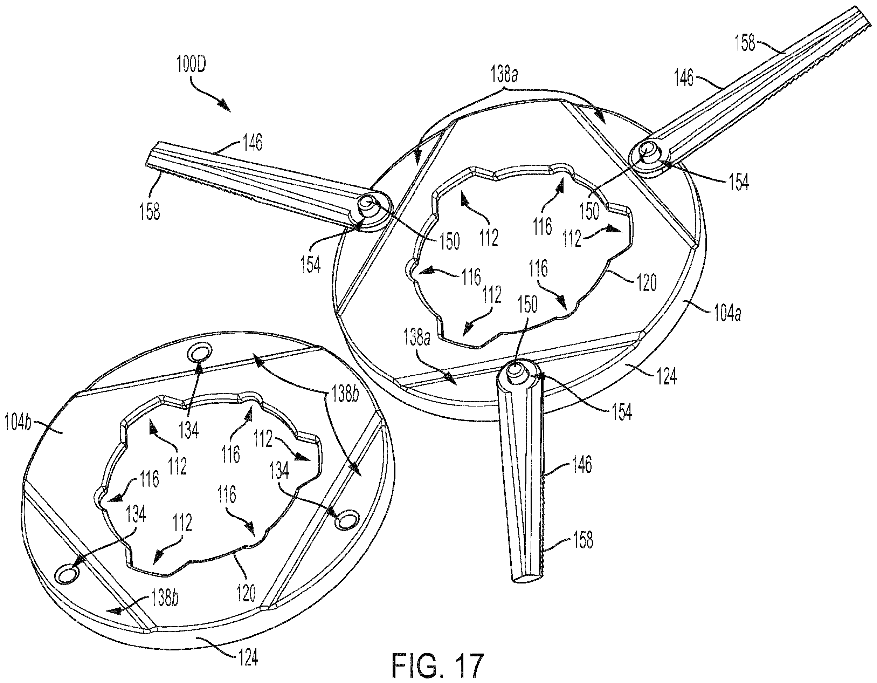

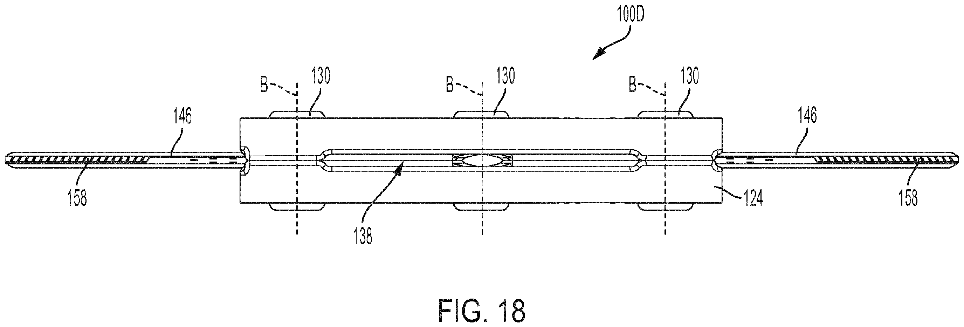

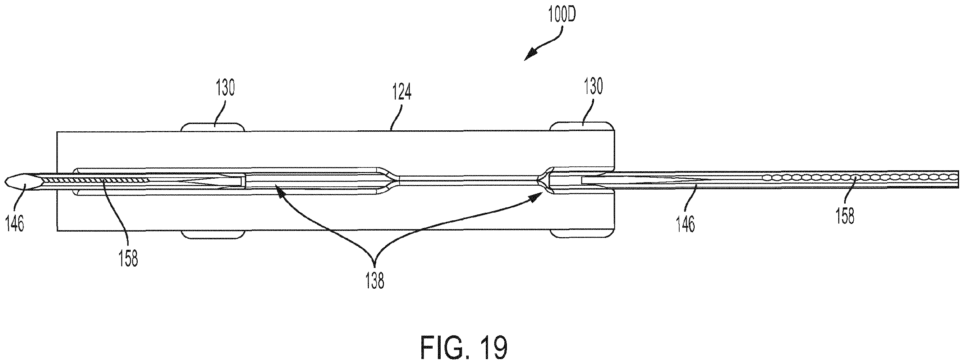

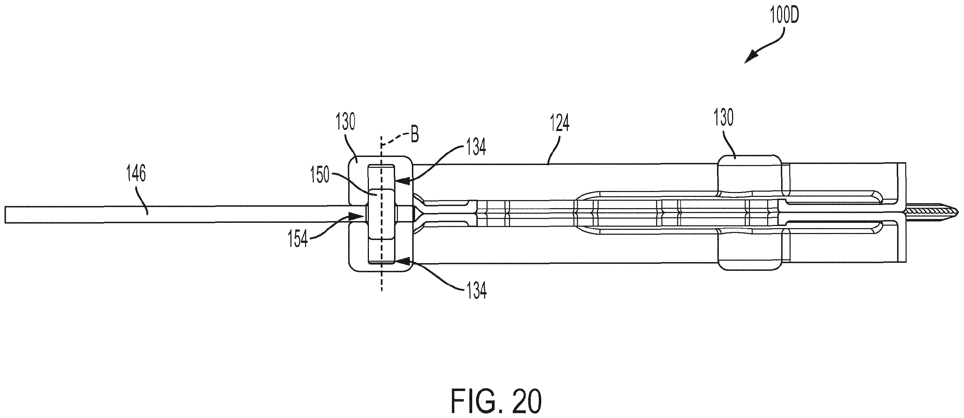

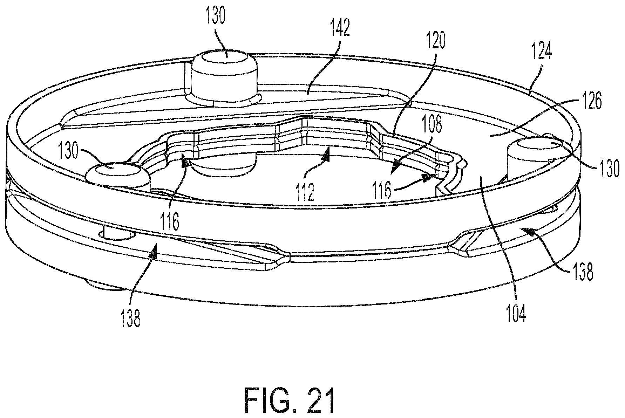

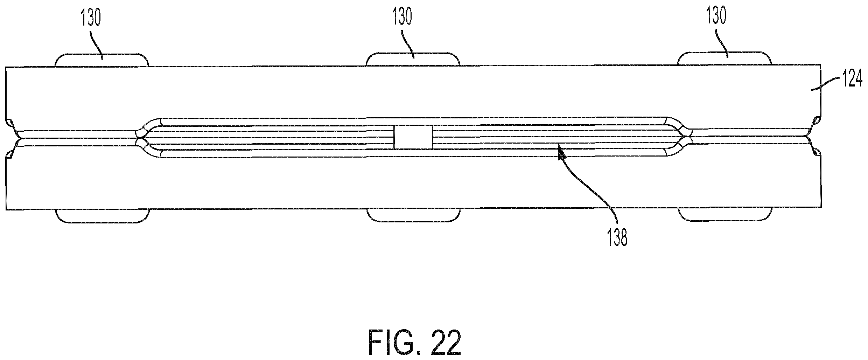

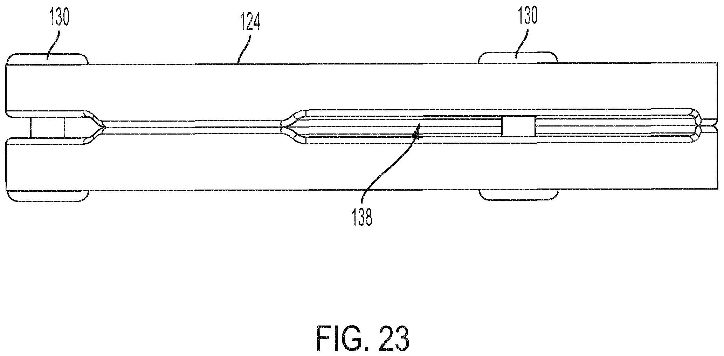

In general, the present disclosure relates to a trimmer head 10 (see Figs. 1-10) for use with an attachment 100 (see, e.g., Figs. 3-6 and 11-12). Each attachment 100 is selectively and removably coupled to the head 10, along with various other attachments to conduct associated operations (e.g., trimming (Figs. 3-6 and 11-12), edging (Fig. 13), blowing (Fig. 14), cutting (Figs. 15-23), etc.) with the trimmer. The head 10 and each attachment 100 have a complementary interface for installation and removal/replacement of the attachment(s) 100.

The trimmer head 10 (see Figs. 1-10) is for use on an exemplary trimmer (not shown). Such a trimmer generally includes a shaft with a handle toward one end and a motor housing enclosing an electric motor with a motor-driven output or drive shaft, having an axis of rotation, for connection to a trimmer head on the other end. Various powered trimmers (e.g., battery-powered, gas-powered, etc.) may be used with the trimmer head 10. Exemplary trimmers are described and illustrated in U.S. Patent No. 8,464,431, issued on June 18, 2013, and in U.S. Patent No. 6,108,914, issued August 29, 2000, the entire contents of both of which are hereby incorporated by reference.

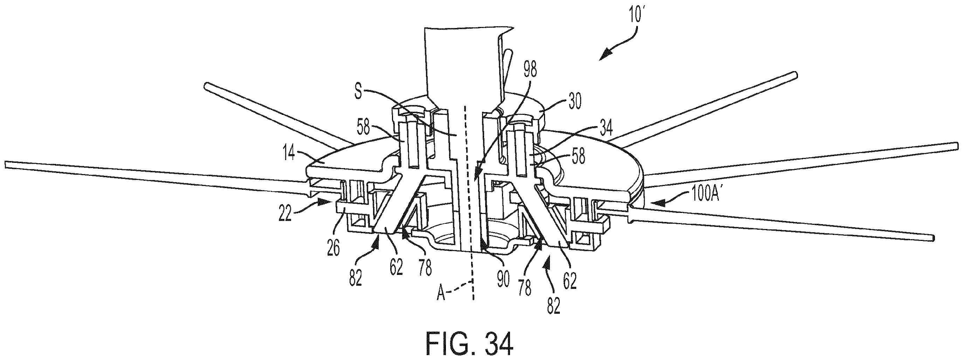

As shown in Figs. 1-10, the head 10 generally includes a body 14 rotatable about an axis of rotation A and defining an axial opening 18 for connection to the trimmer drive shaft S (see Figs. 34-35). The body 14 has (see Figs. 1-2, 6 and 9-10) a central projection and a plate defining an annular channel 22 for receiving a selected attachment 100. The head 10 includes (see Figs. 1, 3-4, 6 and 9-10) a retainer assembly cooperating with the body 14 to selectively retain the attachment 100.

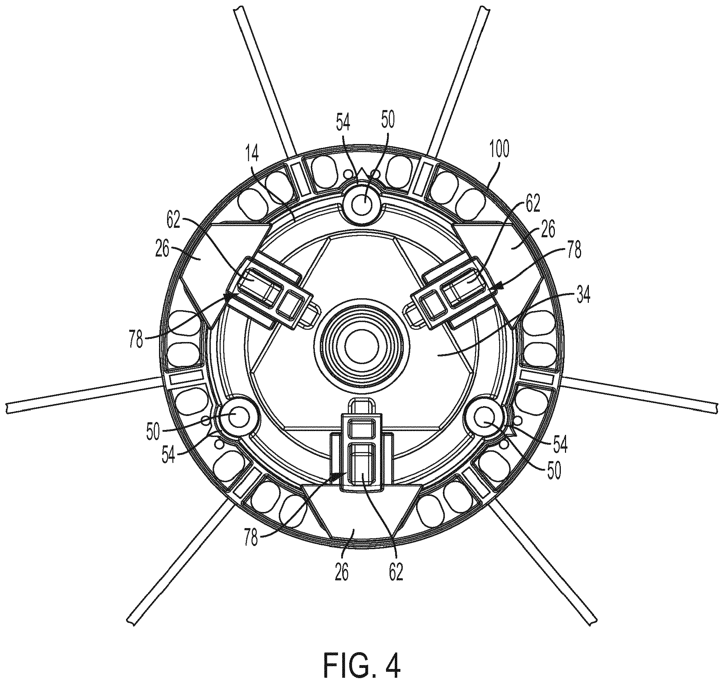

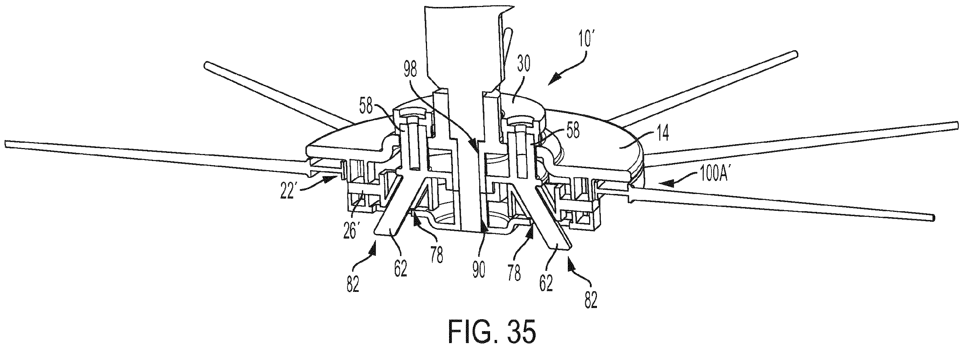

In the illustrated construction, the retainer assembly includes a number (e.g., three shown) of retainers 26 adjustable between a retaining position (Figs. 1, 3-4, 6 and 9-10), in which the retainers 26 axially cover or block the channel 22 to retain the selected attachment 100, and a release position (not shown but similar to that shown in Fig. 35), in which the retainers 26 axially open, uncover or unblock the channel 22 to allow the attachment 100 to move relative to the channel 22 (e.g., to be removed or installed). As shown in Fig. 4, the retainers 26 have substantially the same shape (e.g., trapezoidal) and are spaced substantially equidistant about the axis A (e.g., spaced about 120° apart).

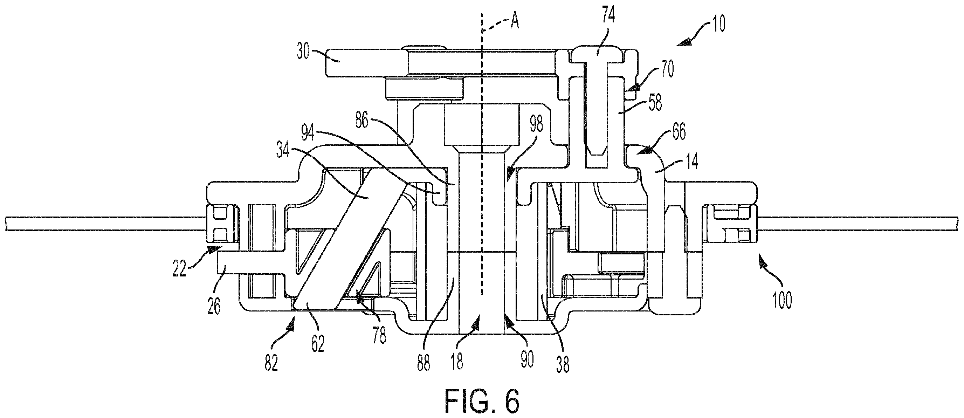

An actuating mechanism (see Figs. 1 and 6; e.g., including a strike plate 30 and a retainer carrier 34) is operable by a user (e.g., by engaging the strike plate 30, a lever (not shown), a guard (not shown), etc.) to adjust the position of the retainers 26. A biasing member biases the retainers 26 to the retaining position; for example, in the illustrated construction (see Fig. 6), a spring 38 biases the actuating mechanism to a position corresponding to the retaining position of the retainers 26.

In the illustrated construction, the retainers 26 are radially movable between the radially-outward, retaining position and the radially-inward release position, and the actuating mechanism is axially movable to adjust the radial position of the retainers 26. In other constructions (not shown), the retainers 26 and/or the actuating mechanism may be movable in another manner (e.g., circumferentially, axially, radially, combinations thereof, etc.) between the positions.

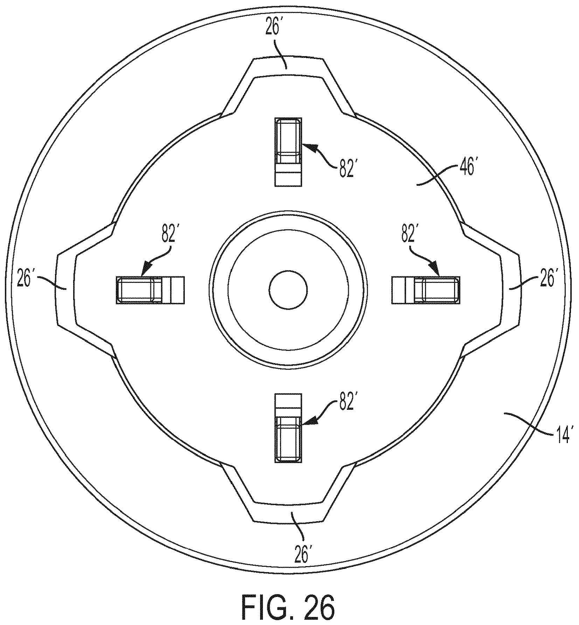

In other constructions, fewer or more than three retainers 26 may be provided (see, e.g., Figs. 26-27), illustrating four retainers 26'). Also, each or all of the retainers 26 may have a different shape than illustrated. In addition, the retainers 26 may have a different spacing (e.g., equidistant based on the number of retainers 26, non-equidistant, etc.).

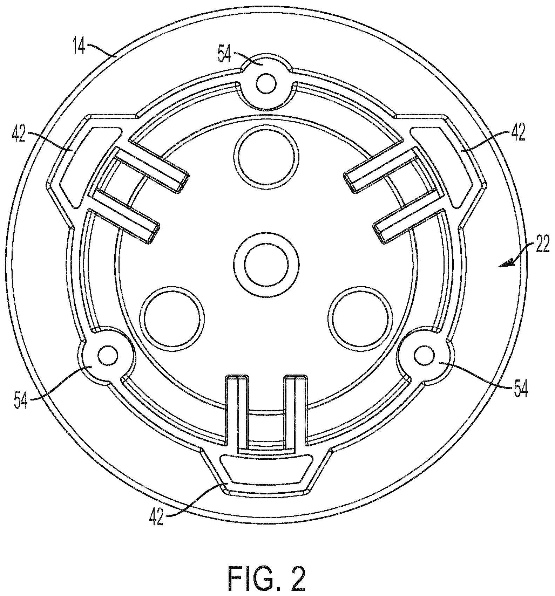

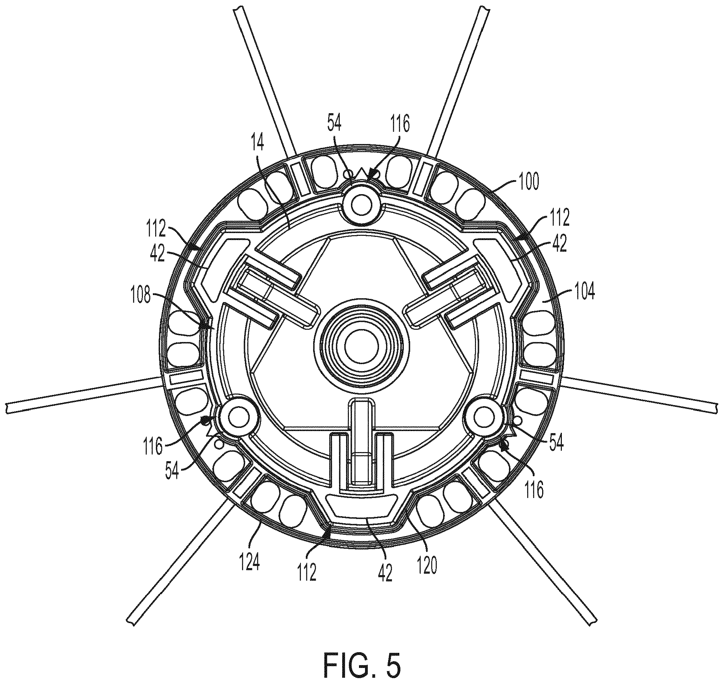

A drive arrangement is provided between the head 10 and the attachment 100 to transfer rotational movement of the head 10 to the attachment 100. In the illustrated construction, the body 14 includes (see Figs. 2 and 5) a number (e.g., three shown) of radial projections 42 drivingly engageable with a supported attachment 100. The illustrated projections 42 have substantially the same shape (e.g., trapezoidal) and are spaced substantially equidistant about the axis A (e.g., spaced about 120° apart). In the illustrated construction, the retainers 26 are positioned circumferentially in alignment with and overlying an associated projection 42 of the body 14. The projections 42 support the retainers 26 in a position (e.g., in the retaining position) and during movement between positions.

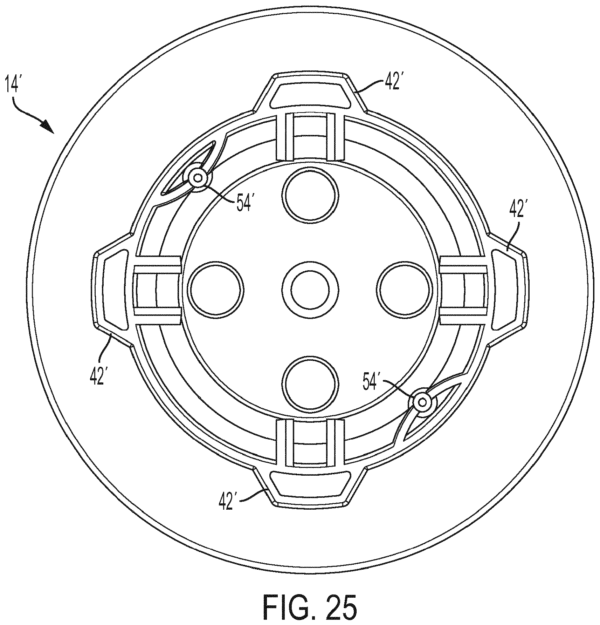

In other constructions (not shown), the body 14 may include fewer or more than three projections 42 (see, e.g., Fig. 25, illustrating four projections 42'). Also, each or all of the projections 42 may have a different shape than illustrated. In addition, the projections 42 may have a different spacing (e.g., equidistant based on the number of projections 42 on the body 14, non-equidistant, etc.). Further, the projections 42 may extend in and/or engage the attachment 100 in a different manner (e.g., axially, circumferentially, combinations thereof, etc.).

The head 10 also includes (see Figs. 1, 3, 6-7 and 9-10) a lower housing 46 connectable to the body 14, for example, with fasteners 50, to house and/or retain components of the head 10 as a unit. The body 14 includes (see Figs. 2 and 4-5) an associated boss 54 for each fastener 50, and each illustrated boss 54 projects radially into the channel 22. The lower housing 46 covers the lower portion of the components of the head 10 to inhibit cut material, debris, etc. from interfering with operation of the components. The lower housing 46 is sized to allow installation and removal of the attachment 100.

As mentioned above, the actuating mechanism is axially movable to cause radial movement of the retainers 26. As also mentioned above, the actuating mechanism includes the strike plate 30 and the retainer carrier 34.

The illustrated strike plate 30 is substantially ring-shaped and forms an upper surface of the head 10. The strike plate 30 and the carrier 34 are axially movable along the axis of rotation A. The carrier 34 includes axial projections 58 and angled projections 62.

The body 14 defines axial openings 66 radially-spaced from and about the opening 18. The strike plate 30 defines recesses 70, and each axial projection 58 of the carrier 34 is inserted through an opening 66 in the body 14 and received in a recess 70 in the strike plate 30. A number (e.g., three shown) of fasteners 74 connects the strike plate 30 and the carrier 34 to capture the body 14 therebetween.

The retainers 26 are supported on the carrier 34 and define angled openings 78 to receive respective angled projections 62 of the carrier 34. The lower housing 46 defines slots 82 allowing axial movement of the carrier 34 toward the release position of the retainers 26 (see, e.g., movement of the retainers 26' from Fig. 34 to Fig. 35).

The body 14 includes a central boss 86 defining the opening 18, and the lower housing 46 has a complementary boss 88 and opening 90 to receive the shaft S. The carrier 34 has a ridge 94 defining a central opening 98 receiving the boss 86 of the body 14 to guide axial movement of the carrier 34.

The spring 38 is positioned around the bosses 86, 88, and the ridge 94 on the carrier 34 provides a guide for the spring 38. The spring 38 is positioned between the lower housing 46 and the carrier 34 to bias the carrier 34, along with the strike plate 30, upwardly. As a result, the retainers 26 are biased to the retaining position.

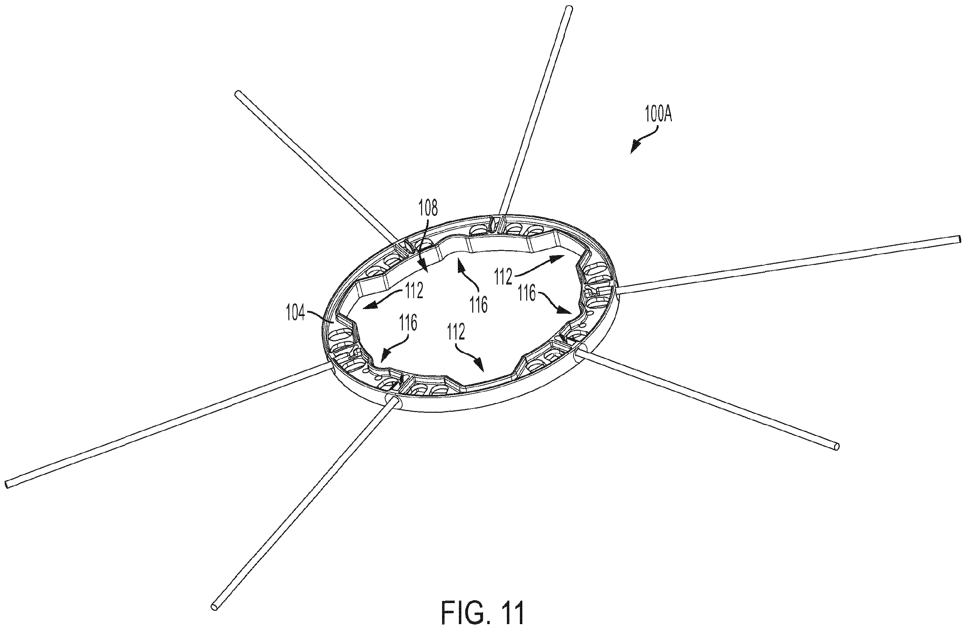

Figs. 11-23 illustrate attachments 100, such as, in the illustrated examples, a string trimmer attachment 100A, an edger attachment 100B, a blower attachment 100C, a flail cutter attachment 100D, etc. The attachment 100 includes a body 104 defining a central opening 108 to engage the body 14 of the head 10 (e.g., in the channel 22).

Each attachment 100 defines a number (e.g., three shown) of notches 112 and a number (e.g., three shown) of recesses 116 around the perimeter of the opening 108. The notches 112 are complementary to and drivingly engageable with the projections 42 on the body 14 to cooperate to provide the drive arrangement. The illustrated notches 112 are shaped (e.g., trapezoidal) and positioned (e.g., equidistant; about 120° apart) to receive the projections 42. The recesses 116 are shaped and positioned to receive the bosses 54. In the illustrated construction, the attachment 100 is supportable on the body 14 in any position in which the projections 42 engage the notches 112.

In other constructions (not shown), attachment 100 may include fewer or more than three notches 112. Also, each or all of the notches 112 may have a different shape than illustrated. In addition, the notches 112 may have a different spacing (e.g., equidistant based on the number of notches 112, non-equidistant, etc.). In constructions in which the interface between the body 14 and the attachment 100 is non-uniform (e.g., the projections 42 and corresponding notches 112 have a different shape and/positioning), the attachment 100 may be installed in a limited number of rotational positions relative to the body 14. In other constructions (not shown), the projections 42 and notches 112 may be reversed and positioned on the other of the body 14 and the attachment 100.

The body 104 includes an inner rim 120, which engages the radial wall of the channel 22 of the body 14, an outer rim 124, and an annular plate 126 extending therebetween. The operating portion of the attachment 100, described in more detail below, extends from the body 104.

The string trimmer attachment 100A, the edger attachment 100B and the blower attachment 100C are each described and illustrated in European Patent Application No. 19161730.7, filed 8th March 2019; in European Patent Application No. 19161726.5, filed 8th March 2019; and in European Patent Application No. 19161724.0, filed 8th March 2019, respectively, the entire contents of all of which are hereby incorporated by reference.

The flail cutter attachment 100D is illustrated in Figs. 15-23. The body 104 is formed of substantially identical body halves 104a, 104b. In other words, each body half 104a, 104b is constructed such that one may be substituted for the other. Each body half 104a, 104b has the opening 108, the notches 112, the recesses 116, the rims 120, 124 and the plate 126. Each body half 104a, 104b includes a number (e.g., three shown) of bosses 130, each defining a recess 134. Each boss 130 is arranged between a notch 112 and an adjacent recess 116.

The body halves 104a, 104b are arranged with a boss 130 and a recess 134 aligned along a pivot axis B. A slot 138 is defined proximate each axis B. Each body half 104a, 104b provides a slot portion 138a, 138b. A raised surface 142 on the plate 126 of each body half 104a, 104b accommodates each slot 138.

The attachment 100D also includes a number (e.g., three shown) of pivotable blades 146 supported by pivot pins 150 for pivoting movement in the respective slots 138. Each blade 146 has a connecting portion defining an opening 154 receiving a pivot pin 146 and a cutting portion 158. The cutting portion 158 has a selected construction (e.g., length, cross-sectional shape, teeth, material, etc.) to perform cutting.

The illustrated attachment 100D is constructed to be assembled, disassembled and reassembled, as necessary or desired by a user. For example, worn or damaged components (e.g., blades 146, pins 150, body halves 104a, 104b) may be replaced, components with different characteristics (e.g., blades 146 with different constructions) may be substituted, etc.

To assemble, the pins 150 are arranged in respective recesses 134 in one body half (e.g., the body half 104a). Each blade 146 is installed on a pin 150. The other body half (e.g., the body half 104b) is installed with its recesses 134 received on the free ends of the respective pins 150. An interference fit is provided between the pins 150 and the recesses 134 to retain the flail cutter attachment 100D in the assembled state. When installed on the head 10, the retainers 26 also operate to maintain the assembled state of the attachment 100D.

To dissemble, the attachment 100D is removed from the head 10, as described above, and the assembly process is reversed. One body half (e.g., the body half 104b) is removed from the pins 150. Components are replaced or substituted, and the attachment 100D is reassembled.

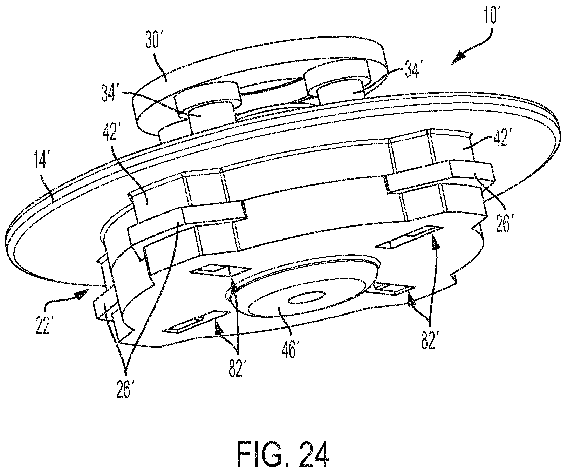

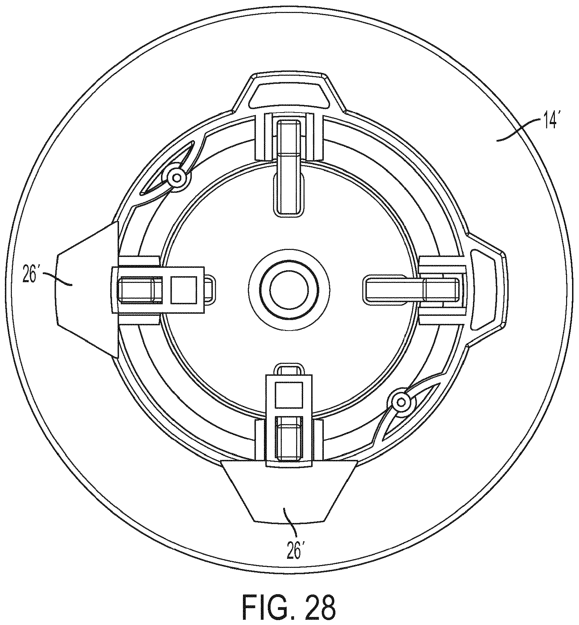

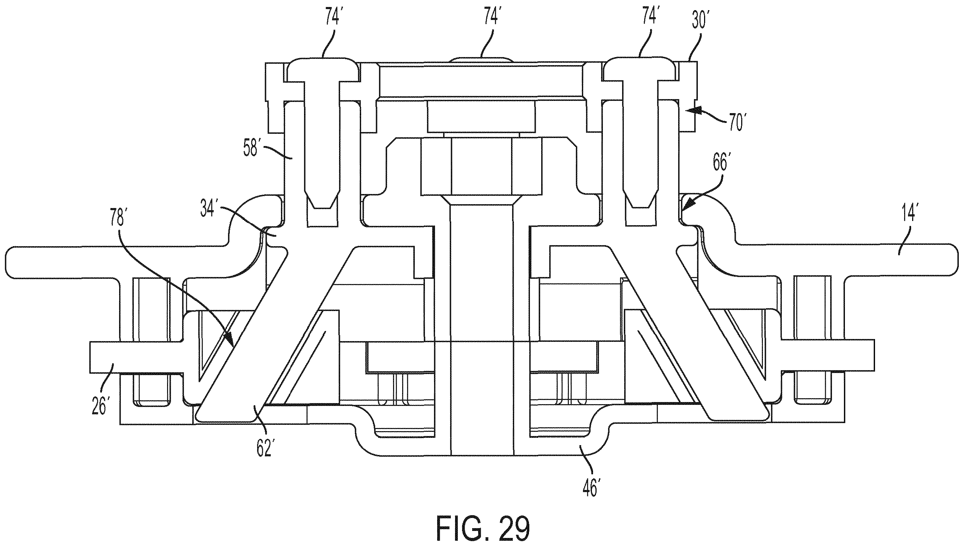

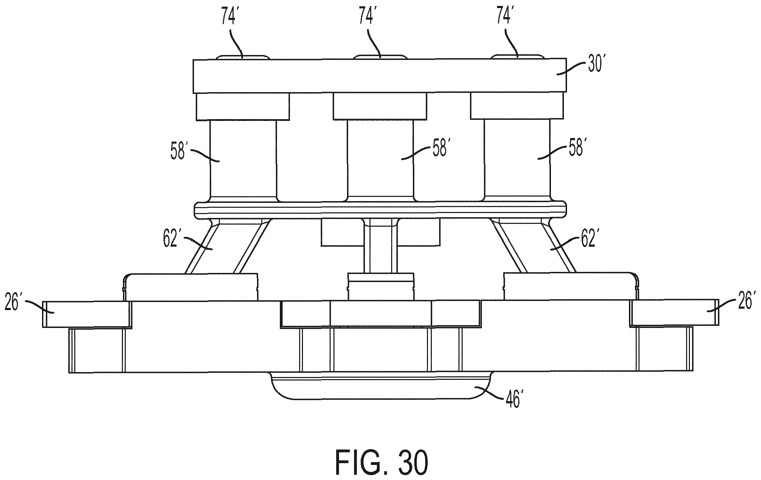

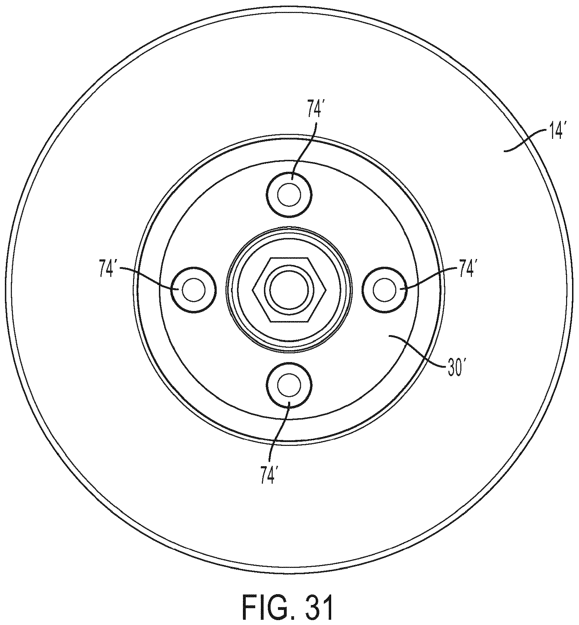

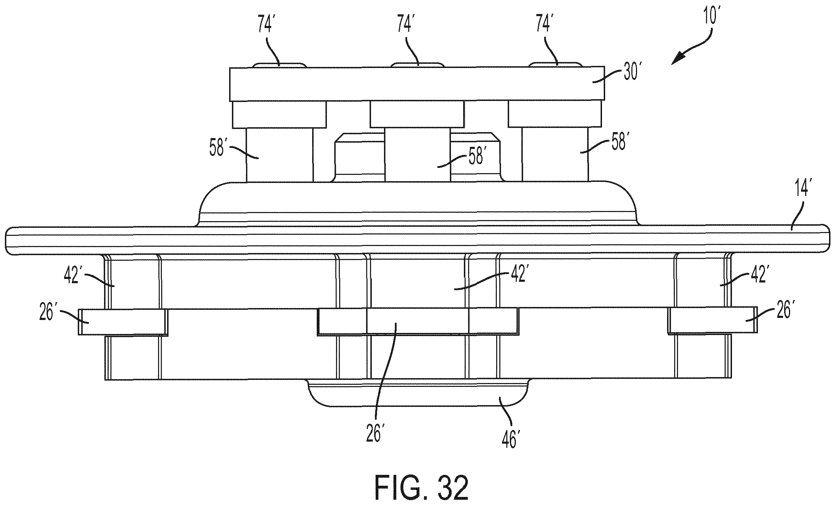

Figs. 24-35 illustrate an alternative construction of a trimmer head 10' for use with a trimmer and with an attachment 100' (see Figs. 34-36). The head 10' and the attachment 100' are similar to the head 10 and the attachment 100 described above and illustrated in Figs. 1-10 and in Figs. 11-23. Common elements have the same reference number ʺ‴.

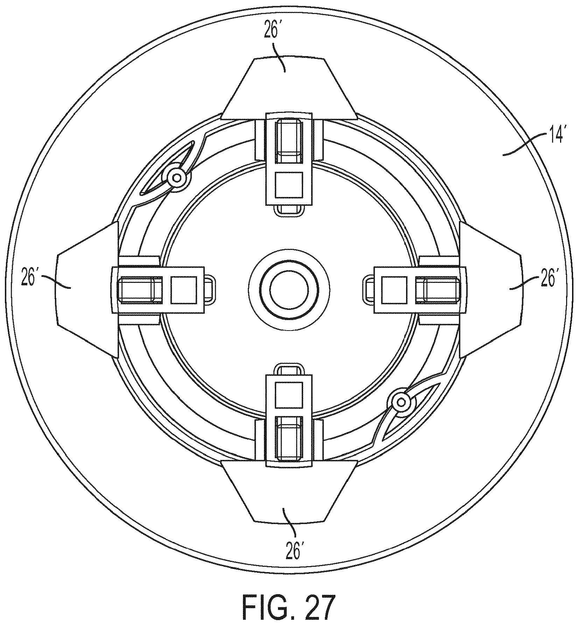

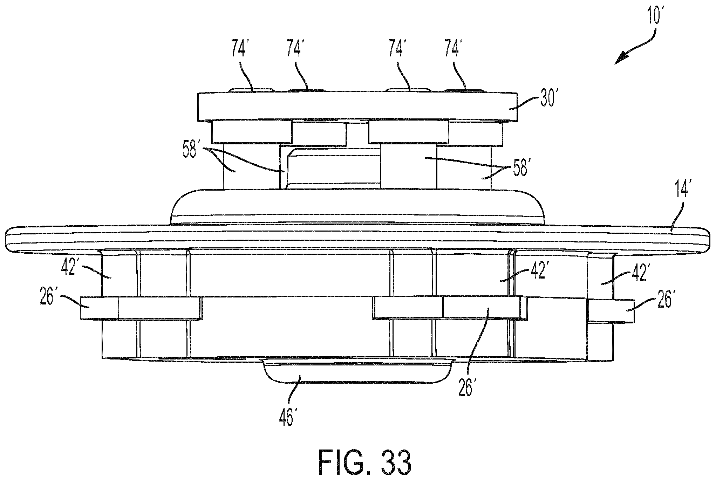

As mentioned above, the head 10' includes (see Figs. 26-27) four retainers 26' and (see Fig. 25) four drive projections 42' (e.g., equidistant; about 90° apart). The carrier 34' includes (see Fig. 33) four axial projections 58' and (see Figs. 27-28) four angled portions 62' carrying the retainers 26'. The head 10' also includes (see Fig. 33) two bosses 54', and the bosses 54' do not project into the channel 22'.

As also mentioned above, Figs. 34-35 illustrate movement of the retainers 26' and the actuating mechanism (the strike plate 30' and the carrier 34'). Fig. 34 illustrates the retaining position, in which the strike plate 30' and the carrier 34' are in the raised position and the retainers 26' are in the radially-outward retaining position, blocking the channel 22'. Fig. 35 illustrates the release position, in which the strike plate 30' and the carrier 34' are in the lowered position and the retainers 26' are in the radially-inward release position, unblocking the channel 22'.

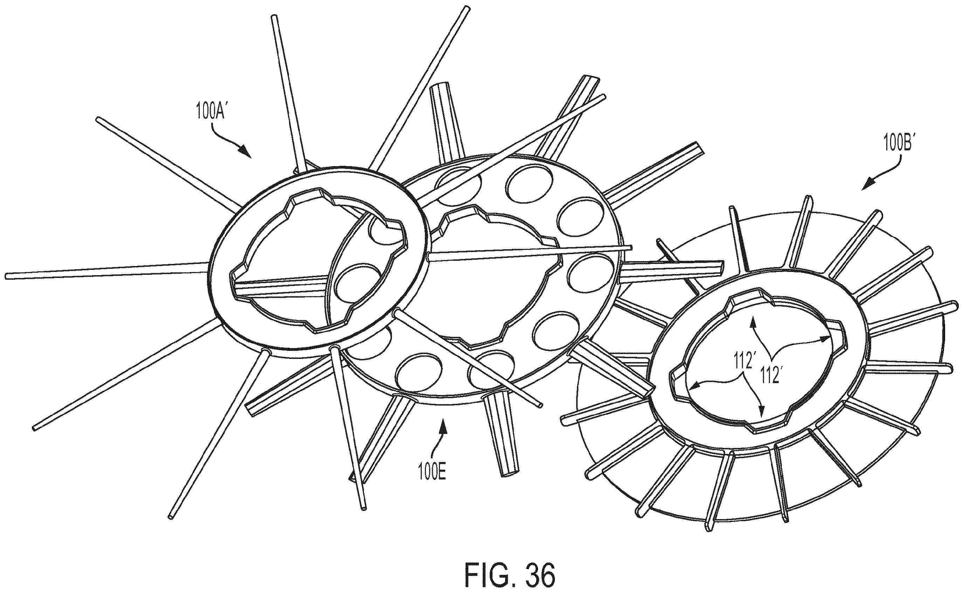

Fig. 36 illustrates attachments 100' for use with the head 10'. Each attachment 100' is used to conduct associated operations (e.g., trimming (attachment 100A'), edging (attachment 100B'), blowing, cutting (attachment 100E), etc.) with the trimmer. Each attachment 100' includes four notches 112' engageable with the drive projections 42'.

The trimming attachment 100A' is formed with the cutting lines having a round cross-section, as illustrated, or a different shape (such as, square, triangular, diamond, etc.) for cutting members 46. The cutting attachment 100E has thicker aerodynamic cross-section cutting elements for weed chopping. The edger attachment 100B' is a digger-type element shaped like a blade for edging.

To install an attachment 100 on the head 10 (or an attachment 100' on the head 10'), the actuating mechanism is operated (e.g., the strike plate 30 is depressed (for example, by direct engagement with a user's hand, through another member, etc.) to move the carrier 34 downwardly) to overcome the bias of the spring 38 and adjust the retainers 26 to the release position, unblocking the channel 22.

In some constructions (not shown), the trimmer includes a movable member to operate the actuating mechanism (e.g., to engage and move the strike plate 30). For example, the trimmer may include a guard (not shown) at least partially covering the head 10 and the supported attachment 100. The guard is movable (e.g., pivotable) relative to the trimmer, and this movement causes downward movement of the strike plate 30 and movement of the retainers 26 to the release position. Movement of the guard may be transmitted through another member (e.g., a lever (not shown)) engaged with the strike plate 30.

During this downward movement of the strike plate 30 and the carrier 34, the retainers 26 move along the angled projections 62 and radially-inwardly to unblock the channel 22. The attachment 100 is installed on the body 14 into the channel 22 with each drive projection 42 being received in an associated notch 112 and each boss 54 being received in an associated recess 116.

To retain the attachment 100, the actuating mechanism is operated (e.g., the strike plate 30 is released, and the spring 38 moves the carrier 34, along with the strike plate 30, upwardly) to adjust the retainers 26 to the retaining position, blocking the channel (see Fig. 6). During this upward movement of the carrier 34, the retainers 26 move along the angled projections 62 and radially-outwardly to block the channel 22 and retain the attachment 100.

To remove the attachment 100, the process is reversed. The actuating mechanism is operated to move the retainers 26 to the release position, unblocking the channel 22. The attachment 100 may then be removed from the channel 22 and from the head 10. If the trimmer is held in the operating orientation, the attachment 100 will fall off of the head 10.

To install another attachment 100, the user may invert the trimmer so that the head 10 faces upwardly and place the attachment 100 on the head 10. The actuating mechanism is operated to move the retainers 26 to the retaining position, blocking the channel 22 and retaining the attachment 100. Due to the simplicity of changing the attachment 100, a user may interchange attachments 100 very quickly (e.g., within seconds), with different attachments 100 being used for different operations (e.g., trimming, edging, blowing, cutting, etc.).

With the attachment 100 supported on the head 10, operation of the trimmer causes rotation of the head 10 and the driven attachment 100 through the drive arrangement (e.g., the drive projections 42 and the notches 112, the bosses 54 and the recesses 116, etc.). The rotating attachment 100 provides the associated operation (e.g., trimming (Figs. 3-6, 11-12 and 36), edging (Fig. 13 and 36), blowing (Fig. 14), cutting (Figs. 15-23 and 36), etc.).

During operation, relative movement of the components of the head 10 is prevented or limited. Centrifugal force on the retainers 26 during rotation of the head 10 maintains the retainers 26 in the radially-outward retaining position, to retain the attachment 100 attached to the head 10.

Due to the simplicity of changing the attachment 100, a user may interchange attachments 100 very quickly (e.g., within seconds). As shown in Figs. 3-6, 11-12, 13-23 and 36, different attachments 100 are used for different operations (e.g. trimming, edging, blowing, cutting, etc.).

With respect to string trimmers, with other trimmer heads using a bump head, there can be issues of loading, line welding and tangling, and vibration. The present trimmer head assembly 10 and the string cutting attachments 100 (see Figs. 3-6, 11-12 and 36) eliminate the need for the bump head, the spool, wound string, etc.

The embodiment(s) described above and illustrated in the figures are presented by way of example only and are not intended as a limitation of the present disclosure. As such, it will be appreciated that variations and modifications to the elements and their configuration and/or arrangement exist within the scope as defined in the appended claims.

One or more independent features and/or independent advantages of the invention may be set forth in the following claims:

## Claims

1. An assembly for use with a trimmer, the assembly comprising:
a body (14; 14') being rotatable about an axis (A) and defining an annular channel (22; 22') for removably receiving an attachment (100; 100'),
an attachment (100; 100') including an attachment body (104; 104') extending about the axis (A) and positionable in the channel (22; 22') and an attachment operation member projecting radially from the attachment body (104), and
a retainer (26; 26') radially movable between a retaining position, in which the retainer (26; 26') overlaps the channel (22; 22') to selectively retain the attachment (100; 100') when the attachment (100; 100') is supported on the body (14; 14'), and a release position, in which the retainer (26; 26') axially opens the channel (22; 22') and relative axial movement of the attachment (22; 22') and the body (14; 14') is allowed.

2. The assembly of claim 1, wherein the body (14; 14') defines a trimmer head (10; 10') including the body (14; 14'), the body (14; 14') being couplable to a drive shaft of a trimmer..

3. The assembly of claim 2, further comprising a biasing member (38) configured to bias the retainer (26) to the retaining position.

4. The assembly of claim 2 or 3, further comprising a projection (42; 42') positioned between the trimmer head (10; 10') and the attachment (100; 100'), the projection (42; 42') being configured to transfer rotation of the trimmer head (10; 10') to the attachment (100; 100').

5. The assembly of claim 4, wherein the projection (42; 42') is circumferentially aligned with the retainer (26; 26').

6. The assembly of any one of claims 1 to 5, further comprising an actuating mechanism operable to adjust the radial position of the retainer (26; 26'), the actuating mechanism being axially movable to actuate the retainer (26; 26').

7. The assembly of claim 6, wherein the actuating mechanism includes a plate (30; 30') engageable by a user to adjust the position of the retainer (26; 26').

8. The assembly of claim 7, wherein the actuating mechanism includes a carrier (34; 34') supporting and receiving an angled projection (62; 62') of the carrier, the plate (30; 30') moving the carrier (34; 34') to cause movement of the retainer (26; 26').

9. The assembly of any one of claims 6 to 8, further including a biasing member (38) configured to bias the actuating mechanism to a position corresponding to the retaining position of the retainer (26).

10. The assembly of any one of claims 6 to 9, further comprising a projection on the body and configured to transfer rotation of the trimmer head to the attachment, the projection being operable to support the retainer in the retaining position.

11. The assembly of any one of claims 6 to 10, further comprising a second retainer (26; 26') circumferentially spaced from the first-mentioned retainer (26; 26'), the second retainer (26; 26') being supported for radial movement between a retaining position, in which the second retainer (26; 26') overlaps the channel (22; 22') to selectively retain the attachment (100; 100') when the attachment (100; 100') is supported on the body (14; 14'), and a release position, in which relative axial movement of the attachment (100; 100') and the head is allowed.

12. A method of operating an assembly for use with a trimmer, the assembly including a trimmer head (10; 10') including a body (14; 14') rotatable about an axis (A) and defining an annular channel (22; 22') for removably receiving an attachment (100; 100'), a retainer (26; 26') selectively positionable to cover the channel (22; 22'), an adjustment mechanism operable to position the retainer (26; 26'), and an attachment (100; 100') including an attachment body (104) defining a central opening (108) and an attachment operation member extending from the attachment body (104), the method comprising:
moving the adjustment mechanism in one direction along the axis (A) to cause the retainer (26; 26') to move radially to uncover the channel (22; 22');
positioning the attachment (100; 100') on the head (10; 10') with the attachment body (104) in the channel (22; 22') and extending about the axis (A); and
moving the adjustment mechanism in an opposite direction along the axis (A) to cause the retainer (26; 26') to move axially to cover the channel (22; 22') and retain the attachment (100; 100') on the head (10; 10').

13. The method of claim 12, wherein moving the adjustment mechanism in one direction causes the retainer (26; 26') to move radially inwardly, and moving the adjustment mechanism in an opposite direction causes the retainer (26; 26') to move radially outwardly; and, optionally,
wherein positioning the attachment on (100; 100') the head (10; 10') further includes positioning a drive projection (42; 42') of the head (10; 10') with an associated notch (112; 112') of the attachment (100;100').

14. The assembly for use with a trimmer according to claims 1 to 11, the assembly further comprising:
a plurality of attachments (100), each of the attachments (100) being selectively,
removably couplable to the trimmer head, the plurality of attachments including a cutting attachment and a second attachment of a different type than the cutting attachment, the second attachment selected from a blower attachment (100C), a string trimmer attachment (100A), an edger attachment (100B), or a flail cutter attachment (100D).

15. The assembly according to claims 1 to 11 and 14, further comprising a flail cutter attachment (100D) comprising:
a body (104) providing an interface for attachment to a drive mechanism for rotation about an axis, the body (104) including a first half (104a) and a separate second half (104b), the first half (104a) being substitutable for the second half (104b);
a plurality of pins (150) connecting the first half (104a) and the second half (104b); and
a plurality of blades (146), each of the plurality of blades (146) including a connecting portion defining an opening (154) receiving a corresponding one of the plurality of pins (150), and a cutting portion (158);
and, optionally, wherein the body (104) defines a plurality of slots (138), and wherein the each of the plurality of blades (146) is positionable in a corresponding one of the plurality of slots (138);
And, further optionally, wherein the first half (104a) and the second half (104b) each include a plurality of bosses (130), each of the plurality of bosses (130) defining a recess (134), the first half (104a) and the second half (104b) being positioned to align a pair of recesses (134) along a pin axis (B), each pair of recesses (134) receiving an associated pin (150).

## Patentansprüche

1. Baugruppe zur Verwendung mit einem Trimmer, wobei die Baugruppe Folgendes umfasst:
einen Körper (14; 14'), der um eine Achse (A) drehbar ist und einen ringförmigen Kanal (22; 22') zum lösbaren Aufnehmen eines Aufsatzes (100; 100') definiert,
einen Aufsatz (100; 100'), einschließlich eines Aufsatzkörpers (104; 104'), der sich um die Achse (A) erstreckt und in dem Kanal (22; 22') und einem Aufsatzbetriebselement, das radial von dem Aufsatzkörper (104) vorsteht, positionierbar ist, und
einen Halter (26; 26'), der radial zwischen einer Halteposition, in welcher der Halter (26; 26') den Kanal (22; 22') zum selektiven Halten des Aufsatzes (100; 100') überlappt, wenn der Aufsatz (100; 100') an dem Körper (14; 14') gelagert ist, und einer Freigabeposition, in welcher der Halter (26; 26') den Kanal (22; 22') axial öffnet und eine relative axiale Bewegung des Aufsatzes (22; 22') und des Körpers (14; 14') ermöglicht wird, gelagert ist.

2. Baugruppe nach Anspruch 1, wobei der Körper (14; 14') einen Trimmerkopf (10; 10'), einschließlich des Körpers (14; 14') definiert, wobei der Körper (14; 14') mit einer Antriebswelle eines Trimmers koppelbar ist.

3. Baugruppe nach Anspruch 2, ferner umfassend ein Vorspannelement (38), das zum Vorspannen des Halters (26) in der Halteposition konfiguriert ist.

4. Baugruppe nach Anspruch 2 oder 3, ferner umfassend einen Vorsprung (42; 42'), der zwischen dem Trimmerkopf (10; 10') und dem Aufsatz (100; 100') positioniert ist, wobei der Vorsprung (42; 42') konfiguriert ist, um die Drehung des Trimmerkopfes (10; 10') zu dem Aufsatz (100; 100') zu übertragen.

5. Baugruppe nach Anspruch 4, wobei der Vorsprung (42; 42') in Umfangsrichtung mit dem Halter (26; 26') ausgerichtet ist.

6. Baugruppe nach einem der Ansprüche 1 bis 5, ferner umfassend einen Betätigungsmechanismus, der betreibbar ist, um die radiale Position des Halters (26; 26') einzustellen, wobei der Betätigungsmechanismus axial beweglich ist, um den Halter (26; 26') zu betätigen.

7. Baugruppe nach Anspruch 6, wobei der Betätigungsmechanismus eine Platte (30; 30') einschließt, die von einem Benutzer in Eingriff gebracht werden kann, um die Position des Halters (26; 26') einzustellen.

8. Baugruppe nach Anspruch 7, wobei der Betätigungsmechanismus einen Träger (34; 34') einschließt, der einen abgewinkelten Vorsprung (62; 62') des Trägers lagert und aufnimmt, wobei die Platte (30; 30') den Träger (34; 34') bewegt, um eine Bewegung des Halters (26; 26') zu bewirken.

9. Baugruppe nach einem der Ansprüche 6 bis 8, ferner aufweisend ein Vorspannelement (38), das konfiguriert ist, um den Betätigungsmechanismus an einer Position vorzuspannen, die der Halteposition des Halters (26) entspricht.

10. Baugruppe nach einem der Ansprüche 6 bis 9, ferner umfassend einen Vorsprung an dem Körper und konfiguriert, um eine Drehung des Trimmerkopfes zu dem Aufsatz zu übertragen, wobei der Vorsprung betriebsfähig ist, um den Halter in der Halteposition zu lagern.

11. Baugruppe nach einem der Ansprüche 6 bis 10, ferner umfassend einen zweiten Halter (26; 26') in Umfangsrichtung von dem erstgenannten Halter (26; 26'), wobei der zweite Halter (26; 26') zur radialen Bewegung zwischen einer Halteposition, in welcher der zweite Halter (26; 26') den Kanal (22; 22') zum selektiven Halten des Aufsatzes (100; 100') überlappt, wenn der Aufsatz (100; 100') an dem Körper (14; 14') gelagert ist, und einer Freigabeposition, in der die relative axiale Bewegung des Aufsatzes (100; 100') und des Kopfes ermöglicht wird, gelagert ist.

12. Verfahren zum Betreiben einer Baugruppe zur Verwendung mit einem Trimmer, wobei die Baugruppe einen Trimmerkopf (10; 10'), einschließlich eines Körpers (14; 14'), der um eine Achse (A) drehbar ist, und einen ringförmigen Kanal (22; 22') zum lösbaren Aufnehmen eines Aufsatzes (100; 100'), einen Halter (26; 26'), der selektiv positionierbar ist, um den Kanal (22; 22') abzudecken, einen Einstellmechanismus, der betreibbar ist, um den Halter (26; 26') zu positionieren, und einen Aufsatz (100; 100') einschließlich eines Aufsatzkörpers (104), der eine zentrale Öffnung (108) und ein Aufsatzelement definiert, das sich von dem Aufsatzkörper (104) erstreckt, einschließt, wobei das Verfahren umfasst:
Bewegen des Einstellmechanismus in eine Richtung entlang der Achse (A), um zu bewirken, dass sich der Halter (26; 26') radial bewegt, um den Kanal (22; 22') abzudecken;
Positionieren des Aufsatzes (100; 100') an dem Kopf (10; 10') mit dem Aufsatzkörper (104) in dem Kanal (22; 22') und sich um die Achse (A) erstreckend; und
Bewegen des Einstellmechanismus in eine entgegengesetzte Richtung entlang der Achse (A), um zu bewirken, dass sich der Halter (26; 26') axial bewegt, um den Kanal (22; 22') abzudecken und den Aufsatz (100; 100') an dem Kopf (10; 10') zu halten.

13. Verfahren nach Anspruch 12, wobei das Bewegen des Einstellmechanismus in eine Richtung bewirkt, dass sich der Halter (26; 26') radial nach innen bewegt, und das Bewegen des Einstellmechanismus in eine entgegengesetzte Richtung bewirkt, dass sich der Halter (26; 26') radial nach außen bewegt; und wahlweise,
wobei das Positionieren des Aufsatzes an (100; 100') dem Kopf (10; 10') ferner das Positionieren eines Antriebsvorsprungs (42; 42') des Kopfes (10; 10') mit einer zugehörigen Rille (112; 112') des Aufsatzes (100; 100') einschließt.

14. Baugruppe zur Verwendung mit einem Trimmer nach einem der Ansprüche 1 bis 11, wobei die Baugruppe ferner umfasst:
eine Vielzahl von Aufsätzen (100), wobei jeder der Aufsätze (100) selektiv entfernbar mit dem Trimmerkopf koppelbar ist, wobei die Vielzahl von Aufsätzen einen Schneidaufsatz und einen zweiten Aufsatz eines anderen Typs als der Schneidaufsatz einschließt, wobei der zweite Aufsatz ausgewählt ist aus einem Gebläseaufsatz (100C), einem Rasentrimmeraufsatz (100A), einem Kantenschneideraufsatz (100B) oder einem Schlegelschneidaufsatz (100D).

15. Baugruppe nach einem der Ansprüche 1 bis 11 und 14, ferner umfassend einen Schlegelschneidaufsatz (100D), umfassend:
einen Körper (104), der eine Schnittstelle zur Befestigung an einem Antriebsmechanismus zur Drehung um eine Achse bereitstellt, wobei der Körper (104) eine erste Hälfte (104a) und eine separate zweite Hälfte (104b) einschließt, wobei die erste Hälfte (104a) durch die zweite Hälfte (104b) ersetzbar ist;
eine Vielzahl von Stiften (150), welche die erste Hälfte (104a) und die zweite Hälfte (104b) verbindet; und eine Vielzahl von Klingen (146), wobei jede der Vielzahl von Klingen (146) einschließlich eines Verbindungsabschnitts, der eine Öffnung (154) definiert, eine entsprechende der Vielzahl von Stiften (150) und einen Schneidabschnitt (158) aufnimmt;
und wahlweise, wobei der Körper (104) eine Vielzahl von Schlitzen (138) definiert und wobei jede der Vielzahl von Klingen (146) in einer entsprechenden der Vielzahl von Schlitzen (138) positionierbar ist;
und ferner wahlweise, wobei die erste Hälfte (104a) und die zweite Hälfte (104b) jeweils eine Vielzahl von Erhebungen (130) einschließt, wobei jede der Vielzahl von Erhebungen (130) eine Aussparung (134) definiert, wobei die erste Hälfte (104a) und die zweite Hälfte (104b) positioniert sind, um ein Paar Aussparungen (134) entlang einer Stiftachse (B) auszurichten, wobei jedes Paar von Aussparungen (134) einen zugehörigen Stift (150) aufnimmt.

## Revendications

1. Ensemble destiné à être utilisé avec une tondeuse, l'ensemble comprenant :
un corps (14 ; 14') étant rotatif autour d'un axe (A) et définissant un canal annulaire (22 ; 22') pour recevoir de manière amovible une fixation (100 ; 100'),
une fixation (100 ; 100') incluant un corps de fixation (104 ; 104') s'étendant autour de l'axe (A) et positionnable dans le canal (22 ; 22') et un élément d'opération de fixation faisant saillie radialement à partir du corps de fixation (104), et
un dispositif de retenue (26 ; 26') déplaçable radialement entre une position de retenue, dans laquelle le dispositif de retenue (26 ; 26') chevauche le canal (22 ; 22') pour retenir sélectivement la fixation (100 ; 100') lorsque la fixation (100 ; 100') est supportée sur le corps (14 ; 14'), et une position de libération, dans laquelle le dispositif de retenue (26 ; 26') ouvre axialement le canal (22 ; 22') et un déplacement axial relatif de la fixation (22 ; 22') et du corps (14 ; 14') est permis.

2. Ensemble selon la revendication 1, dans lequel le corps (14 ; 14') définit une tête de tondeuse (10 ; 10') incluant le corps (14 ; 14'), le corps (14 ; 14') étant couplable à un arbre d'entraînement d'une tondeuse.

3. Ensemble selon la revendication 2, comprenant en outre un élément de sollicitation (38) configuré pour solliciter le dispositif de retenue (26) vers la position de retenue.

4. Ensemble selon la revendication 2 ou 3, comprenant en outre une saillie (42 ; 42') positionnée entre la tête de tondeuse (10 ; 10') et la fixation (100 ; 100'), la saillie (42 ; 42') étant configurée pour transférer une rotation de la tête de tondeuse (10 ; 10') vers la fixation (100 ; 100').

5. Ensemble selon la revendication 4, dans lequel la saillie (42 ; 42') est alignée circonférentiellement avec le dispositif de retenue (26 ; 26').

6. Ensemble selon l'une quelconque des revendications 1 à 5, comprenant en outre un mécanisme d'actionnement opérable pour ajuster la position radiale du dispositif de retenue (26 ; 26'), le mécanisme d'actionnement étant déplaçable axialement pour actionner le dispositif de retenue (26 ; 26').

7. Ensemble selon la revendication 6, dans lequel le mécanisme d'actionnement inclut une plaque (30 ; 30') pouvant être mise en prise par un utilisateur pour ajuster la position du dispositif de retenue (26 ; 26').

8. Ensemble selon la revendication 7, dans lequel le mécanisme d'actionnement inclut un appui (34 ; 34') supportant et recevant une saillie inclinée (62 ; 62') de l'appui, la plaque (30 ; 30') déplaçant l'appui (34 ; 34') pour amener un déplacement du dispositif de retenue (26 ; 26').

9. Ensemble selon l'une quelconque des revendications 6 à 8, incluant en outre un élément de sollicitation (38) configuré pour solliciter le mécanisme d'actionnement vers une position correspondant à la position de retenue du dispositif de retenue (26).

10. Ensemble selon l'une quelconque des revendications 6 à 9, comprenant en outre une saillie sur le corps et configurée pour transférer une rotation de la tête de tondeuse vers la fixation, la saillie étant opérable pour supporter le dispositif de retenue dans la position de retenue.

11. Ensemble selon l'une quelconque des revendications 6 à 10, comprenant en outre un second dispositif de retenue (26 ; 26') espacé circonférentiellement à partir du premier dispositif de retenue (26 ; 26') mentionné, le second dispositif de retenue (26 ; 26') étant supporté pour un déplacement radial entre une position de retenue, dans laquelle le second dispositif de retenue (26 ; 26') chevauche le canal (22 ; 22') pour retenir sélectivement la fixation (100 ; 100') lorsque la fixation (100 ; 100') est supportée sur le corps (14 ; 14'), et une position de libération, dans laquelle un déplacement axial relatif de la fixation (100 ; 100') et de la tête est permis.

12. Procédé d'opération d'un ensemble destiné à être utilisé avec une tondeuse, l'ensemble incluant une tête de tondeuse (10 ; 10') incluant un corps (14 ; 14') rotatif autour d'un axe (A) et définissant un canal annulaire (22 ; 22') pour recevoir de manière amovible une fixation (100 ; 100'), un dispositif de retenue (26 ; 26') positionnable sélectivement pour couvrir le canal (22 ; 22'), un mécanisme d'ajustement opérable pour positionner le dispositif de retenue (26 ; 26'), et une fixation (100 ; 100') incluant un corps de fixation (104) définissant une ouverture centrale (108) et un élément d'opération de fixation s'étendant à partir du corps de fixation (104), le procédé comprenant : le déplacement du mécanisme d'ajustement dans une direction le long de l'axe (A) pour amener le dispositif de retenue (26 ; 26') à se déplacer radialement pour découvrir le canal (22 ; 22') ;
le positionnement de la fixation (100 ; 100') sur la tête (10 ; 10') avec le corps de fixation (104) dans le canal (22 ; 22') et s'étendant autour de l'axe (A) ; et
le déplacement du mécanisme d'ajustement dans une direction opposée le long de l'axe (A) pour amener le dispositif de retenue (26 ; 26') à se déplacer axialement pour couvrir le canal (22 ; 22') et retenir la fixation (100 ; 100') sur la tête (10 ; 10').

13. Procédé selon la revendication 12, dans lequel le déplacement du mécanisme d'ajustement dans une direction amène le dispositif de retenue (26 ; 26') à se déplacer radialement vers l'intérieur, et le déplacement du mécanisme d'ajustement dans une direction opposée amène le dispositif de retenue (26 ; 26') à se déplacer radialement vers l'extérieur ; et, éventuellement,
dans lequel le positionnement de la fixation sur (100 ; 100') la tête (10 ; 10') inclut en outre le positionnement d'une saillie d'entraînement (42 ; 42') de la tête (10 ; 10') avec une encoche (112 ; 112') associée de la fixation (100 ; 100').

14. Ensemble destiné à être utilisé avec une tondeuse selon les revendications 1 à 11, l'ensemble comprenant en outre :
une pluralité de fixations (100), chacune des fixations (100) étant sélectivement couplable, de manière amovible à la tête de tondeuse, la pluralité de fixations incluant une fixation de coupe et une seconde fixation d'un type différent de la fixation de coupe, la seconde fixation choisie parmi une fixation de soufflage (100C), une fixation de tondeuse à fil (100A), une fixation de coupe-bordures (100B), ou une fixation de tailleuse à fléaux (100D).

15. Ensemble selon les revendications 1 à 11 et 14, comprenant en outre une fixation de tailleuse à fléaux (100D) comprenant :
un corps (104) fournissant une interface pour une fixation à un mécanisme d'entraînement pour une rotation autour d'un axe, le corps (104) incluant une première moitié (104a) et une seconde moitié (104b) séparée, la première moitié (104a) étant remplaçable par la seconde moitié (104b) ;
une pluralité de broches (150) connectant la première moitié (104a) et la seconde moitié (104b) ; et une pluralité de lames (146), chacune de la pluralité de lames (146) incluant une partie de connexion définissant une ouverture (154) recevant une correspondante parmi la pluralité de broches (150), et une partie de coupe (158) ;
et, éventuellement, dans lequel le corps (104) définit une pluralité de fentes (138), et dans lequel la chacune parmi la pluralité de lames (146) est positionnable dans une correspondante parmi la pluralité de fentes (138) ;
Et, en outre éventuellement, dans lequel la première moitié (104a) et la seconde moitié (104b) incluent chacune une pluralité de bossages (130), chacun parmi la pluralité de bossages (130) définissant un évidement (134), la première moitié (104a) et la seconde moitié (104b) étant positionnées pour aligner une paire d'évidements (134) le long d'un axe de broche (B), chaque paire d'évidements (134) recevant une broche (150) associée.
